Europäisches Patentamt

European Patent Office

Office européen des brevets

(11) Veröffentlichungsnummer: **0 210 586**
**A2**

(12) **EUROPÄISCHE PATENTANMELDUNG**

(21) Anmeldenummer: 86110112.9

(51) Int. Cl.⁴: **B32B 27/32**

(22) Anmeldetag: 23.07.86

(30) Priorität: 01.08.85 DE 8522205 U

(43) Veröffentlichungstag der Anmeldung:
04.02.87 Patentblatt 87/06

(84) Benannte Vertragsstaaten:
BE DE FR GB

(71) Anmelder: Bischof und Klein GmbH & Co.
Rahestrasse 47
D-4540 Lengerich I.W.(DE)

(72) Erfinder: Brönstrup, Hans-Jürgen
Pommernstrasse 17
D-4540 Lengerich(DE)

(74) Vertreter: Busse & Busse Patentanwälte
Postfach 1226 Grosshandelsring 6
D-4500 Osnabrück(DE)

(54) **Abdeckbahn zum Oberflächenschutz von Kunststoffplatten.**

(57) Eine Abdeckbahn zum Oberflächenschutz von Kunststoffplatten besteht aus einer oberen Deckschicht (1) mit einer rauhen Oberseite (4), einer mittleren Tragschicht (2) aus Kunststoff und einer unteren Klebstoffschicht (3), mittels welcher die Abdeckbahn auf die zu schützende Oberfläche der Kunststoffplatte aufklebbar ist. Zumindest die Deckschicht (1) und die Tragschicht (2) sind von einer zweischichtigen Coextrusions-Polyolefinfolie gebildet, wobei die Deckschicht (1) zur Ausbildung ihrer rauhen Oberseite (4) eine durch einen körnigen Zuschlagstoff gebildete Oberflächenrauhigkeit aufweist und die Tragschicht (2) mit einer glatten, die Klebstoffschicht (3) tragenden Unterseite (5) versehen ist.

EP 0 210 586 A2

## Abdeckbahn zum Oberflächenschutz von Kunststoffplatten

Die Erfindung betrifft eine Abdeckbahn zum Oberflächenschutz von Kunststoffplatten, bestehend aus einer oberen Deckschicht mit einer rauhen Oberseite, einer mittleren Tragschicht aus Kunststoff und einer unteren Klebstoffschicht, mittels welcher die Abdeckbahn auf die zu schützende Oberfläche der Kunststoffplatte aufklebbar ist.

Bei einer bekannten derartigen Abdeckbahn zum Oberflächenschutz von Platten aus Kunststoff, z.B. aus PMMA, besteht die obere Deckschicht aus Papier, während die Tragschicht aus Polyäthylen besteht. Für die obere Deckschicht wird Papier deshalb eingesetzt, weil es sich wegen seiner rauhen Oberseite zur Herstellung von Konstruktionszeichnungen, nach denen die Kunststoffplatten bearbeitet werden, leicht mit Bleistift oder Kugelschreiber beschreiben läßt und einen hohen Reibwiderstand aufweist, wodurch die zu schützenden Oberflächen der Kunststoffplatten bei deren Lagerung, Transport und Weiterverarbeitung beispielsweise durch Sägen oder Bohren gegen mechanische Beschädigungen geschützt sind. Wegen der Steifigkeit des Papiers ist bei der bekannten Abdeckbahn die untere Klebstoffschicht in der Regel von einem Dauerklebstoff auf der Basis von Kautschuk, vorzugsweise Kautschuk-Latex, gebildet. Derartige Klebstoffe besitzen jedoch eine relativ schlechte Witterungsbeständigkeit und eine hohe Anfälligkeit gegen UV-Bestrahlung, wodurch es nach Lagerung der durch aufgeklebte Teilstücke der Abdeckbahn oberflächengeschützten Kunststoffplatten zu einer Ablösung der Polyäthylen-Tragschicht von der Kunststoffplattenoberfläche kommen kann. Nachteilig wirkt sich auch die geringe Reißfestigkeit, die schlechte Planlage und die Quellung des Papiers bei hoher Luftfeuchtigkeit bei der Handhabung und Weiterverarbeitung der Kunststoffplatten aus, wobei insbesondere ein Abheben der Papierdeckschicht an den Rändern der Kunststoffplatten zu beobachten ist.

Der Erfindung liegt die Aufgabe zugrunde, eine Abdeckbahn zum Oberflächenschutz von Kunststoffplatten der eingangs angegebenen Art zu schaffen, die unter Erhalt einer guten Beschreibbarkeit der Deckschichtoberseite und eines wirksamen Schutzes der Kunststoffplattenoberfläche eine verbesserte Witterungsbeständigkeit insbesondere gegenüber Feuchtigkeit aufweist und von Beschränkungen hinsichtlich des für die Ausbildung der Klebstoffschicht einsatzfähigen Klebstoffs weitgehend frei ist.

Ausgehend von einer Abdeckbahn zum Oberflächenschutz von Kunststoffplatten der eingangs angegebenen Art wird diese Aufgabe nach der Erfindung dadurch gelöst, daß zumindest die Deckschicht und die Tragschicht von einer zweischichtigen Coextrusions-Polyolefinfolie gebildet sind, von denen die Deckschicht zur Ausbildung ihrer rauhen Oberseite eine durch einen körnigen Zuschlagstoff gebildete Oberflächenrauhigkeit aufweist und die Tragschicht mit einer glatten, die Klebstoffschicht tragenden Unterseite versehen ist. Durch die durch den körnigen Zuschlagstoff geschaffene rauhe Oberseite der Deckschicht ist deren Beschreibbarkeit zur Anfertigung von Arbeitszeichnungen wie auch ein hoher Reibwiderstand gewahrt, der eine sichere Stapelung und Lagerung der mit aufgeklebten Teilstücken der erfindungsgemäßen Abdeckbahn oberflächengeschützten Kunststoffplatten gewährleistet. Dieser Oberflächenschutz ist bei der erfindungsgemäßen Abdeckbahn weiter dadurch verbessert, daß für die Deckschicht ein Polyolefin zur Anwendung kommt, das gegenüber Papier sowohl eine höhere Weiterreißfestigkeit in Längs-und Querrichtung als auch eine höhere Oberflächenfestigkeit gegen Abrieb od. dgl. Oberflächenbeschädigungen aufweist. Die auf einfache Weise nach dem Coextrusionsverfahren miteinander vereinigten Schichten der Abdeckbahn stellen ferner deren dauerhafte gegenseite Verbindung sicher und gewährleisten eine optimale Planlage der aufgeklebten Abdeckbahnabschnitte auch bei unterschiedlichen Klimabedingungen, da gegenüber einer von Papier gebildeten Deckschicht keine Wasseraufnahme bzw. Austrocknung der Deckschicht bei der erfindungsgemäßen Abdeckbahn erfolgt. Schließlich können wegen der im Vergleich zu Papier als Deckschicht geringeren Steifigkeit der erfindungsgemäßen Abdeckbahn insgesamt eine Vielzahl von Klebstoffen zur Ausbildung der unteren Klebstoffschicht verwendet werden, wozu neben den auch bei den bekannten Abdeckbahnen eingesetzten Klebstoffen auf Kautschuk-Latex-Basis insbesondere Polyacrylsäureester-Dispersionen zu nennen sind, die gegenüber den Kautschuk-Latex-Klebern eine bessere UV-und Witterungsbeständigkeit besitzen. Dabei kann auch der Coextrusions-Polyolefinfolie selbst zur Erhöhung ihrer UV-Beständigkeit ein UV-Stabilisator zugesetzt sein.

Die weitere Ausgestaltung der Erfindung sieht vor, daß die Deck-und die Tragschicht von einer Coextrusions-Polyäthylenfolie gebildet ist. Dabei kommen insbesondere für die Deckschicht ein Polyäthylen mittlerer Dichte und für die Tragschicht ein Polyäthylen niederer Dichte in Betracht.

Der körnige Zuschlagstoff der Deckschicht weist zweckmäßig eine Korngröße von etwa 15 bis 60 µm auf und kann am Gesamtgewicht der Deckschicht einen Anteil von etwa 5 bis 10 Gew.% haben. Als Zuschlagstoff eignet sich insbesondere ein natürliches Kalziumkarbonat, wie Kreide.

Die untere Klebstoffschicht, mittels der die passend abgeschnittenen Teilstücke der erfindungsgemäßen Abdeckbahn auf die zu schützenden Kunststoffplatten aufgeklebt werden, kann nach der Coextrusionsherstellung der Trag-und Deckschicht durch Beschichtung der glatten Unterseite der Tragschicht ge bildet werden, wenn beispielsweise ein Kautschuk-Latex-Kleber oder eine Polyacrylsäureester-Dispersion zum Einsatz kommt. Es ist aber auch möglich, diese untere Klebstoffschicht von einer mit der Deck-und der Tragschicht coextrudierten Copolymerisatschicht zu bilden, die dem die Deck-und die Tragschicht bildenden Polyolefin in ihrer Zusammensetzung angepaßt ist und, sofern diese Schichten, wie vorzugsweise vorgesehen, aus Polyäthylen bestehen, ihrerseits von einem Polyäthylen-Copolymerisat gebildet ist. Durch geeignete Zusätze erhält die coextrudierte Klebstoffschicht eine Beschaffenheit schwacher Dauerklebrigkeit oder sie kann aus einem normalerweise nicht klebenden Zustand durch thermische Aktivierung in den Zustand der Klebrigkeit überführt werden. Diese Möglichkeit besteht im übrigen auch für auf die coextrudierte Trag-und Deckschicht gesondert aufgetragene Klebstoffschichten bei entsprechender Zusammensetzung.

Die erfindungsgemäße Abdeckbahn besitzt in Verbindung mit entsprechend witterungsbeständig eingestellten Klebstoffschichten auf ihrer Unterseite ein hohes Maß an Beständigkeit gegen Freibewitterung. Die zum Schutze der Kunststoffplatten auf deren Oberseite aufgeklebten Teilstücke der erfindungsgemäßen Deckbahn lassen sich nach Fertigbearbeitung der Kunststoffplatte aufgrund der entsprechend eingestellten Klebstoffe leicht und rückstandsfrei abziehen. Auch stellt sich beim Sägen od. dgl. Bearbeitungsvorgängen der Kunststoffplatten kein Hochziehen der Kanten der Abdeckung ein, was sich ebenfalls als vorteilhaft gegenüber einer Deckschicht aus Papier erweist.

Die Dicke der Trag-und der Deckschicht wird entsprechend den gestellten Anforderungen gewählt und kann jeweils etwa 50 bis 150 µm betragen, wobei die flächenbezogene Masse der unteren Klebstoffschicht, sofern diese nach einem gesonderten Beschichtungsverfahren nach Durchführung der Coextrusion der Trag-und Deckschicht durchgeführt wird, etwa 5 bis 10 g/m² betragen kann. Im Falle der Coextrusion der unteren Klebstoffschicht gemeinsam mit der Trag-und der Deckschicht liegt das Gewicht der Kleb stoffschicht etwa im Bereich von 30 g/m².

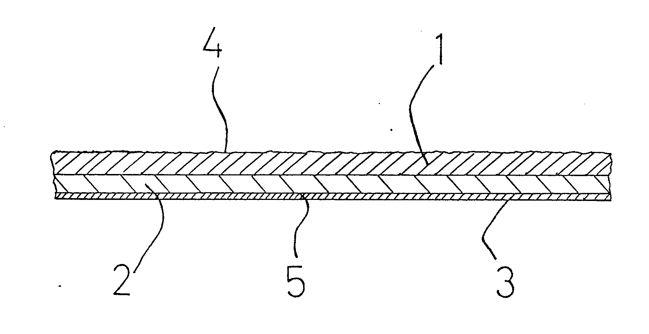

Ein Ausführungsbeispiel des Gegenstands der Erfindung ist im folgenden anhand der Zeichnung näher veranschaulicht, deren einzige Figur einen Schnitt durch die erfindungsgemäße Abdeckbahn zeigt.

Mit 1 ist die obere Deckschicht, mit 2 die mittlere Tragschicht und mit 3 die untere Klebstoffschicht bezeichnet. Die Schichten 1 und 2 sind im Coextrusionsverfahren hergestellt, wobei die Deckschicht 1 durch einen körnigen Zuschlagstoff eine rauhe Oberfläche 4 besitzt, durch die die Deckschicht 1 eine gute Beschreibbarkeit und einen hohen Reibwiderstand erhält. Die Unterseite 5 der Tragschicht 2, auf der die Klebstoffschicht 3 aufgetragen ist, ist hingegen glatt ausgebildet.

## Ansprüche

1. Abdeckbahn zum Oberflächenschutz von Kunststoffplatten, bestehend aus einer oberen Deckschicht mit einer rauhen Oberseite, einer mittleren Tragschicht aus Kunststoff und einer unteren Klebstoffschicht, mittels welcher die Abdeckbahn auf die zu schützende Oberfläche der Kunststoffplatte aufklebbar ist, dadurch gekennzeichnet, daß zumindest die Deckschicht (1) und die Tragschicht (2) von einer zweischichtigten Coextrusions-Polyolefinfolie gebildet sind, von denen die Deckschicht -(1) zur Ausbildung ihrer rauhen Oberseite (4) eine durch einen körnigen Zuschlagstoff gebildete Oberflächenrauhigkeit aufweist und die Tragschicht -(2) mit einer glatten, die Klebstoffschicht (3) tragenden Unterseite (5) versehen ist.

2. Abdeckbahn nach Anspruch 1, dadurch gekennzeichnet, daß die Deck-und die Tragschicht -(1,2) von einer Coextrusions-Polyäthylenfolie gebildet sind.

3. Abdeckbahn nach Anspruch 2, dadurch gekennzeichnet, daß die Deckschicht (1) aus Polyäthylen mittlerer Dichte und die Tragschicht -(2) aus Polyäthylen niederer Dichte besteht.

4. Abdeckbahn nach einem der Ansprüche 1 bis 3, dadurch gekennzeichnet, daß der Coextrusions-Polyolefinfolie ein UV-Stabilisator zugesetzt ist.

5. Abdeckbahn nach einem der Ansprüche 1 bis 4, dadurch gekennzeichnet, daß der körnige Zuschlagstoff der Deckschicht (1) eine Korngröße von etwa 15 bis 60 µm aufweist.

6. Abdeckbahn nach einem der Ansprüche 1 bis 5, dadurch gekennzeichnet, daß der Anteil des Zuschlagstoffes am Gesamtgewicht der Deckschicht (1) etwa 5 bis 10 Gew.% beträgt.

7. Abdeckbahn nach einem der Ansprüche 1 bis 6, dadurch gekennzeichnet, daß der Zuschlagstoff der Deckschicht (1) von natürlichem Kalziumkarbonat gebildet ist.

8. Abdeckbahn nach einem der Ansprüche 1 bis 7, dadurch gekennzeichnet, daß der Zuschlagstoff der Deckschicht (1) aus Kreide besteht.

9. Abdeckbahn nach einem der Ansprüche 1 bis 8, dadurch gekennzeichnet, daß die Klebstoffschicht (3) von einer Polyacrylsäureester-Dispersion gebildet ist.

10. Abdeckfolie nach einem der Ansprüche 1 bis 8, dadurch gekennzeichnet, daß die Klebstoffschicht (3) von einer mit der Deck-und der Tragschicht (1,2) coextrudierten Copolymerisatschicht gebildet ist.